# EUROPEAN PATENT SPECIFICATION

(11) **EP 0 657 315 B1**
(45) Date of publication and mention of the grant of the patent: **29.01.1997**
(21) Application number: 94830525.5
(22) Date of filing: 04.11.1994
(51) Int. Cl.: B60H 1/32, F28D 1/04

(54) **Air conditioning assembly for industrial vehicles**
Klimaanlage für Nutzfahrzeuge
Système de climatisation pour véhicules industriels

(30) Priority: 26.11.1993 IT TO930898
(43) Date of publication of application: 14.06.1995
(73) Proprietor: IVECO FIAT S.p.A., 10156 Torino (IT)
(72) Inventor: Pippione, Eugenio, I-10141 Torino (IT); Bellero, Domenico, I-10026 Santena (Torino) (IT); Carignano, Marco, I-10134 Torino (IT)
(74) Representative: Buzzi, Franco

(56) References cited:
- EP-A- 0 414 433
- EP-A- 0 522 471
- US-A- 3 479 834
- US-A- 4 831 844
- US-A- 5 046 554
- US-A- 5 062 477
- US-A- 5 219 023

## Description

The present invention is related to air conditioning assemblies for industrial vehicles, of the type comprising a condenser with associated air fan for condensation of the refrigerating fluid of the conditioning assembly.

In the application of such air conditioning assemblies to industrial vehicles which are intended to operate in torrid climates, for instance at tropical latitudes under environment temperature between 40°C and 50°C and more, the condenser normally sized with thermal exchange surfaces suitable for more temperate climates (such as for instance the West European area) is inadequate for keeping the delivery pressure of the refrigerating fluid at an acceptable level without jeopardising the reliability of the compressor of the air conditioning assembly. The delivery pressure of the refrigerating fluid, normally an ecologic refrigerating fluid R134a, already higher than 20 bar at continental temperatures, is actually further increased at tropical temperatures.

In order to solve this problem, the most immediate solution would consist of further increasing the surface of the condenser, for instance from normal values of 16-20 dm², to at least 24 dm² and further. Such a surface increase involves however an appreciable encumbrance increase of the condenser-air fan unit, normally installed in an area of the vehicle power unit (traditionally in proximity of a front wheel inner fender) wherein the available space is very narrow. For this reason the increase of the condenser surface would imply huge modifications of the vehicle, and related cost and standard inconveniences.

US-A-3,479,834 discloses an air conditioning system of the above-mentioned type, comprising a second condenser placed parallely to and in close proximity of the first condenser. The second condenser, which may be similar to the first condenser, is connected thereto through a circuit in series of the refrigerating fluid.

This known construction, further to being relatively complicated owing to the fact that the two condensers have not necessarily the same structure, involves low performance and reliability of the air conditioning assembly owing to increased refrigerant pressure loss in the series-connected circuit. Consequently, such a construction is not suitable for operation at high environmental temperatures (over 47-50°C).

The object of the present invention is to give a simple, practical and functional solution to the above mentioned problem, enabling an easy adaptation of an air conditioning assembly, normally designed for continental temperatures, to the requirements of tropical climates, while avoiding to increase the surface of the condenser beyond the normal standard parameters thereof and, therefore, without any problem of encumbrance for installation thereof on board an industrial vehicle.

According to the invention, this object is achieved by virtue of the fact that, in an air conditioning assembly for industrial vehicles of the type set forth in the above, the first and second condensers are identical and connected to each other through a circuit in parallel of the refrigerating fluid.

The idea of solution according to the invention is based upon overcoming a technical prejudice, according to which adopting a double condenser in an air conditioning assembly was considered to be not sufficient to reduce the delivery pressure of the refrigerating fluid to a level such that the functionality of the compressor of the group is not jeopardised.

On the contrary, it has been surprisingly verified that the disposition according to the invention permits to keep this delivery pressure at still lower values than those which can be obtained with a single oversized condenser.

Moreover, the employment of the second condenser, which results in a minimum increase of the overall thickness of the traditional condenser-air fan unit, enables installation thereof within the normally available space on board the vehicle, without any need of structural modifications.

A further advantage deriving from the disposition according to the invention resides in that the application of the second condenser to the condenser-air fan unit can be carried out in a simple and economical way, using the said already existing components of the unit, thus avoiding expensive investments.

Normally the air fan includes a box-like body housing the condenser of the conventional unit. For the transformation according to the invention, the box-like body is conveniently formed with a perimetral wall extension within which the second condenser is fitted.

Accordingly, the box-like body of the air fan constitutes in practice a modular unit which can be easily and readily adapted from the single condenser arrangement to the arrangement according to the invention, with the addition of the second condenser.

Additional features and advantages of the invention will become apparent from the following detailed description, with reference to the annexed drawings purely provided by way of non limiting example, in which:

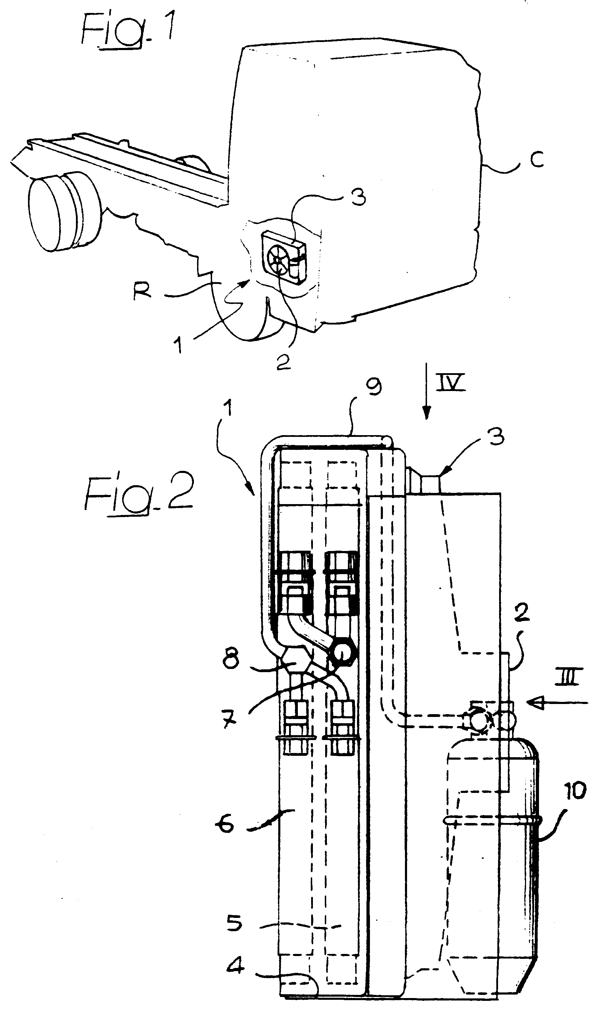

- figure 1 is a diagrammatic perspective view of an industrial vehicle provided with an air conditioning assembly and condenser-air fan unit according to the invention,
- figure 2 is a side elevational and enlarged view of the condenser-air fan unit,
- figure 3 is a front elevational and simplified view according to arrow III of figure 2, and
- figure 4 is a top plan view according to arrow IV of figure 2.

Referring to the drawings, reference V generally designates an industrial vehicle having a driving, normally tiltable, cab C, under which the power unit (not shown) and the auxiliary equipment of the vehicle, among which an air conditioning assembly, are situated.

The air conditioning assembly, which is generally conventional and thus not depicted entirely for the lack of simplicity, is of the refrigerating fluid type (normally an ecological refrigerating fluid R134a), and the essential components thereof are traditionally constituted by a compressor, an evaporator and a condenser unit.

The condenser unit, diagrammatically indicated as a whole at 1 in the drawings, is in the case of the shown example installed laterally, sideways of the fender of one of the front wheels R of the vehicle V.

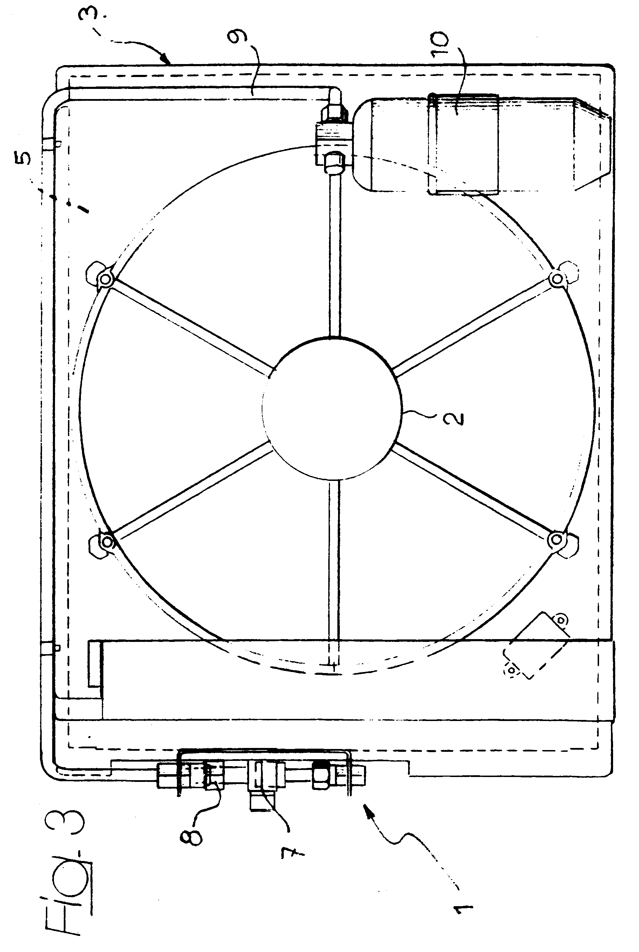

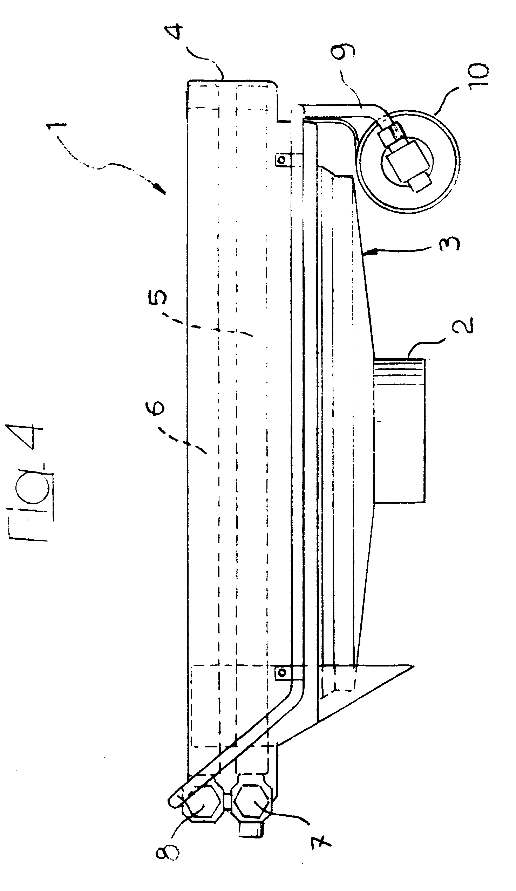

This unit 1, shown in detail in figures 2 through 4, essentially comprises an electrical fan 2 whose wheel (omitted for simplicity of illustration in the drawings) is supported by a box-like body 3 formed with a perimetral wall 4 having a generally quadrangular shape and housing therein, in mutual parallel condition and in close proximity to each other, a first condenser 5 and a second condenser 6.

The condensers 5 and 6, normally identical to each other, are of conventional type and, therefore, they will not be disclosed in detail.

In connection with the present invention, it is sufficient to clarify that they are connected in parallel to the refrigerating fluid circuit, through a double inlet nipple 7 adapted to be connected with a delivery pipe, and through a double outlet nipple 8 connected to a discharge pipe 9.

Reference 10 indicates a filter for the refrigerating fluid, secured frontally to the box-like body 3.

According to the above-disclosed disposition, the condenser unit 10 with two identical side-by-side condenser 5, 6 cooled by the same fan 2 and connected in parallel with the refrigerating fluid circuit, enables to obtain an efficient operation of the air conditioning assembly of the vehicle V also in use at extremely high environment temperature, while keeping the delivery pressure of said refrigerating fluid at sufficiently low levels, so that the reliability of the compressor of the assembly is not negatively affected.

The overall size of the unit 1, also in connection with the thickness thereof, is in practice identical to that of a conventional unit, normally employed for the use in temperate climates, employing only the condenser 5.

The addition of the second condenser 6 does not require any modifications of the vehicle V, since the space normally available for housing the unit with the only condenser 5 is sufficient to receive also the second condenser 6, nor any particular structural modifications of the unit 1, but for the prolongation of the perimetral wall 4 of the box-like body 3 to a length substantially corresponding to the thickness of the second condenser 6.

From this point of view, the construction of the box-like body 3 can be made modular, so as to allow immediate adaptation to the one or to the other arrangement of the unit 1.

Lastly it is to be pointed out that, following experimental texts carried out by the applicant, it has been surprisingly verified that the use of the second condenser 6 permits to maintain the delivery pressure of the refrigerating fluid within still lower values than those obtained by oversizing the surface of the condenser 5 alone.

Naturally the details of construction and the embodiment may be widely varied with respect to what has been disclosed and illustrated, without thereby departing from the scope of the present invention, such as defined in the appended claims.

## Claims

1. Air conditioning assembly for industrial vehicles (V), comprising a first condenser (5) with associated air fan (2) for the condensation of the refrigerating fluid of the conditioning assembly, and a second condenser (6) placed parallelly to and in close proximity of said first condenser (5), characterised in that said first and second condensers (5, 6) are identical and connected to each other through a circuit in parallel (7, 8, 9) of the refrigerating fluid.

2. Conditioning assembly according to claim 1, wherein the air fan (2) includes a box-like body (3) housing said first condenser (5), characterised in that the box-like body (3) is formed with a perimetral wall extension (4) within which said second condenser (6) is fitted.

## Patentansprüche

1. Klimaanlagenanordnung für Nutzfahrzeuge (V), mit einem ersten Kondensator (5) mit einem zugeordneten Luftgebläse (2) zum Kondensieren des Kühlfluids der Klimaanlagenanordnung, und mit einem zweiten Kondensator (6), der parallel zu dem ersten Kondensator (5) und in unmittelbarer Nähe zu diesem angeordnet ist,
**dadurch gekennzeichnet,**
daß der erste und der zweite Kondensator (5,6) miteinander identisch sind und in Parallelverbund (7,8,9) in einen Kühlfluidkreis sind.

2. Klimaanlagenanordnung nach Anspruch 1, wobei das Luftgebläse (2) einen kastenartigen Körper (3) aufweist, in dem der erste Kondensator (5) untergebracht ist,
**dadurch gekennzeichnet,**
daß der kastenartige Körper (3) mit einer Umfangswandverlängerung (4) ausgebildet ist, innerhalb derer der zweite Kondensator (6) eingepaßt ist.

## Revendications

1. Ensemble de conditionnement d'air pour véhicules industriels (V), comprenant un premier condenseur (5) équipé d'un ventilateur d'air (2) pour la condensation du fluide réfrigérant de l'ensemble de conditionnement, et un deuxième condenseur (6) placé parallèlement audit premier condenseur (5) et très près de celui-ci, caractérisé en ce que lesdits premier et deuxième condenseurs (5, 6) sont identiques et raccordés l'un à l'autre à travers un circuit en parallèle (7, 8, 9) du fluide réfrigérant.

2. Ensemble de conditionnement selon la revendication 1, dans lequel le ventilateur d'air (2) comprend un corps en caisson (3) qui renferme ledit premier condenseur (5), caractérisé en ce que le corps en caisson (3) est muni d'un prolongement (4) de paroi périphérique dans lequel ledit deuxième condenseur (6) est logé.
